# EUROPEAN PATENT APPLICATION

(11) **EP 4 560 785 A1**
(43) Date of publication of application: **28.05.2025**
(21) Application number: 24213096.1
(22) Date of filing: 14.11.2024
(51) Int. Cl.: H01M 10/613, H01M 10/643, H01M 10/653, H01M 50/213, H01M 50/655, H01M 10/6555, H01M 50/244

(54) **BATTERY PACK**

(30) Priority: 27.11.2023 KR 20230167188
(71) Applicant: SAMSUNG SDI CO., LTD., Yongin-si, Gyeonggi-do 17084 (KR)
(72) Inventor: Lee, Daepyo, Yongin-si, Gyeonggi-do 17084 (KR)
(74) Representative: Gulde & Partner

(57) **Abstract**

A battery pack (10) includes battery cells (300), a housing (100) accommodating the battery cells, a bus bar (400) electrically connecting the battery cells, (300) a holder portion (200) fixing a bottom portion and a side portion of the battery cells, a cooling unit (110) under the holder portion (200) to cool the battery cells, and a filling portion (210) contacting a surface portion of the battery cells between the plurality of battery cells and the cooling unit. The filling portion (210) covers at least part of the bottom portion (301) of the battery cells and at least part of the side portion (302) of the battery cells.

## Description

### BACKGROUND

### 1. Field

One or more embodiments relate to a battery pack.

### 2. Description of the Related Art

Generally, a secondary battery can be charged and discharged, unlike a primary battery that cannot be recharged. Secondary batteries are used as energy sources for mobile devices, electric vehicles, hybrid vehicles, electric bicycles, uninterruptible power supplies, etc. Depending on the type of external device that the secondary batteries are applied to, the secondary batteries may be used in the form of a single battery or in the form of a module in which multiple battery cells are connected and grouped into one unit.

Small mobile devices such as mobile phones may operate for a certain amount of time based on the output and capacity of a single battery, whereas for devices requiring long-term driving and high-power operations, such as electric vehicles and hybrid vehicles that consume a lot of power, a module type including a plurality of batteries may be utilized due to output and capacity issues. The output voltage or output current may be increased with the number of built-in batteries.

### SUMMARY

One or more embodiments provide a battery pack achieving a fixing force of a battery cell through a structure for fixing a bottom portion and a side portion of the battery cell together.

One or more embodiments provide a battery pack that achieves excellent heat-dissipating performance due to a structure in which an opening portion is formed in a holder portion fixing a battery cell.

However, these problems are exemplary, and the problems to be solved by the present disclosure are not limited thereto.

Additional aspects will be set forth in part in the description which follows and, in part, will be apparent from the description, or may be learned by practice of the presented embodiments of the present disclosure.

According to one or more embodiments, a battery pack includes battery cells, a housing accommodating the battery cells, a bus bar electrically connecting the battery cells, a holder portion fixing a bottom portion and a side portion of the battery cells, a cooling unit under the holder portion to cool the battery cells, and a filling portion contacting a surface portion of the battery cells between the plurality of battery cells and the cooling unit. The filling portion covers at least part of the bottom portion of the battery cells and at least part of the side portion of the battery cells.

In the battery pack according to embodiments of the present disclosure, the holder portion may include an opening portion through which a part of the bottom portion and a part of the side portion of the battery cells are exposed, and the filling portion may cover the part of the bottom portion and the part of the side portion of the battery cells exposed by the opening portion.

In the battery pack according to embodiments of the present disclosure, a sheet portion may be between the filling portion and the cooling unit.

In the battery pack according to embodiments of the present disclosure, the holder portion may include a first holder portion along a circumferential direction of a side portion of a battery cell among the battery cells to fix the side portion of the battery cell, a second holder portion in substantially a center of a bottom portion of the battery cell, and a third holder portion bent along the bottom portion and the side portion and connecting the first holder portion to the second holder portion.

In the battery pack according to embodiments of the present disclosure, the second holder portion may have a ring shape and a first opening portion on the bottom portion of the battery cell such that the battery cell may be exposed to outside of the holder portion through the first opening portion.

In the battery pack according to embodiments of the present disclosure, a first filling portion covering a part of the bottom portion of the battery cell may be accommodated in the first opening portion.

In the battery pack according to embodiments of the present disclosure, the third holder portion may include 3rd-1 holder portions arranged circumferentially around the second holder portion and extending radially outward from the second holder portion on the bottom portion of the battery cell, and a second opening portion between an outer side of the second holder portion and two adjacent 3rd-1 holder portions among the 3rd-1 holder portions on the bottom portion of the battery cell such that the battery cell may be exposed to outside of the holder portion through the second opening portion.

In the battery pack according to embodiments of the present disclosure, a second filling portion covering part of the bottom portion of the battery cell may be accommodated in the second opening portion.

In the battery pack according to embodiments of the present disclosure, the first holder portion may be spaced apart from the bottom portion of the battery cell, and the third holder portion may include 3rd-2 holder portions spaced apart from each other in a circumferential direction of the side portion of the battery cell and a third opening portion between the first holder portion and the bottom portion of the battery cell and between two adjacent 3rd-2 holder portions among the 3rd-2 holder portions on the side portion of the battery cell such that the battery cell may be exposed to outside of the holder portion through the third opening portion.

In the battery pack according to embodiments of the present disclosure, a third filling portion covering part of the side portion of the battery cell may be accommodated in the third opening portion.

In the battery pack according to embodiments of the present disclosure, the first holder portion, the second holder portion, and the third holder portion may be integral.

In the battery pack according to embodiments of the present disclosure, the third holder portion may include 3rd-1 holder portions arranged circumferentially around the second holder portion and may extend radially from the second holder portion on the bottom portion of the battery cell, and 3rd-2 holder portions spaced apart from each other in a circumferential direction of the side portion of the battery cell. The 3rd-1 holder portions and the 3rd-2 holder portions may be integral.

Other aspects, features and advantages than described above will become apparent from the detailed description, claims, and drawings for carrying out the present disclosure below.

### BRIEF DESCRIPTION OF THE DRAWINGS

The above and other aspects, features, and advantages of certain embodiments of the present disclosure will be more apparent from the following description taken in conjunction with the accompanying drawings.
FIG. 1 is a partial exploded perspective view of a battery pack according to one or more embodiments of the present disclosure;
FIG. 2 is a partial plan view of a battery pack according to one or more embodiments of the present disclosure;
FIG. 3 is an exploded perspective view of a plurality of battery cells and a holder portion according to one or more embodiments of the present disclosure;
FIG. 4 is a plan view of a holder portion according to one or more embodiments of the present disclosure;
FIG. 5 is a cross-sectional view taken along A-A in FIG. 3;
FIG. 6 is a view of a battery pack viewed in a direction B of FIG. 3;
FIG. 7 is view of a battery pack viewed in a direction B of FIG. 3, including a filling portion, according to one or more embodiments of the present disclosure; and
FIG. 8 is an exploded perspective view of a part of a holder portion into which a battery cell is inserted, together with a filling portion, according to one or more embodiments of the present disclosure.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items.

The present disclosure may have various modifications thereto and various embodiments, and thus particular embodiments will be illustrated in the drawings and described in detail in a detailed description. To describe the present disclosure, the same component, even when shown in different embodiments, will be denoted by the same reference numeral.

Hereinafter, embodiments of the present disclosure will be described in detail with reference to the accompanying drawings, and in description with reference to the drawings, the same or corresponding components are given the same reference numerals, and redundant description thereto will be omitted.

In the following embodiments, the terms such as first, second, etc., have been used to distinguish one component from other components, rather than limiting.

In the following embodiments, singular forms include plural forms unless apparently indicated otherwise contextually.

In the following embodiments, the terms "include", "have", or the like, are intended to mean that there are features, or components, described herein, but do not preclude the possibility of adding one or more other features or components.

In the drawings, the size of components may be exaggerated or reduced for convenience of description. For example, the size and thickness of each component shown in the drawings are shown for convenience of description, and thus the present disclosure is not necessarily limited to the illustration.

In the following embodiments, an x-axis, a y-axis, and a z-axis are not limited to three axes on an orthogonal coordinate system, and may be interpreted in a broad sense including them. For example, the x-axis, the y-axis, and the z-axis may be orthogonal to each other, but may also refer to different directions that are not orthogonal to each other.

If certain embodiments may be implemented otherwise, a particular process order may be performed differently from the order described. For example, two processes described in succession may be performed substantially simultaneously, or may be performed in an order reverse to the order described.

The term used herein is used to describe particular embodiments, and is not intended to limit the present disclosure. Herein, it should be understood that the term "include", "have", or the like used herein is to indicate the presence of features, numbers, steps, operations, components, parts, or a combination thereof described in the specifications, and does not preclude the presence or addition of one or more other features, numbers, steps, operations, components, parts, or a combination thereof.

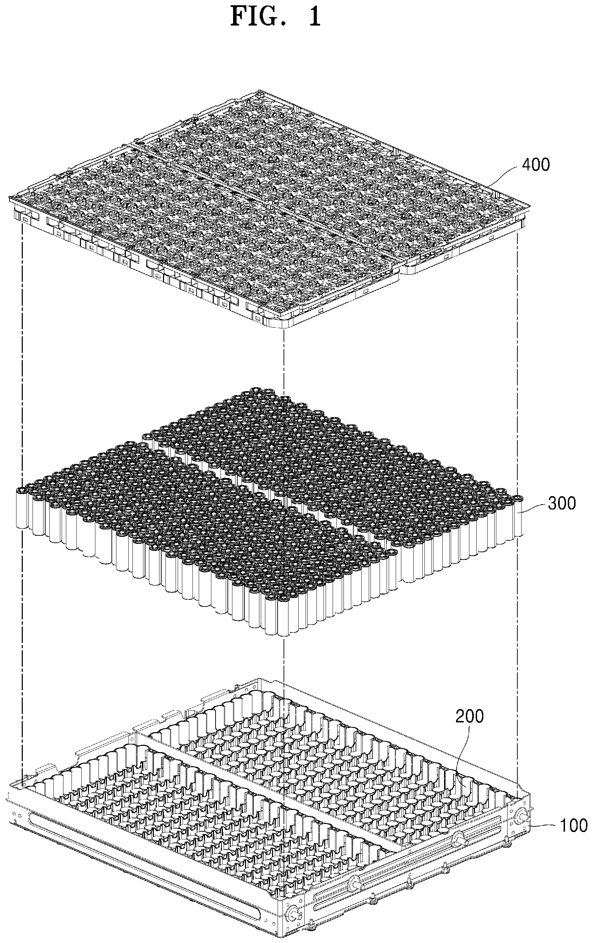

Hereinbelow, a battery pack according to embodiments of the present disclosure will be described with reference to FIGS. 1 to 8.

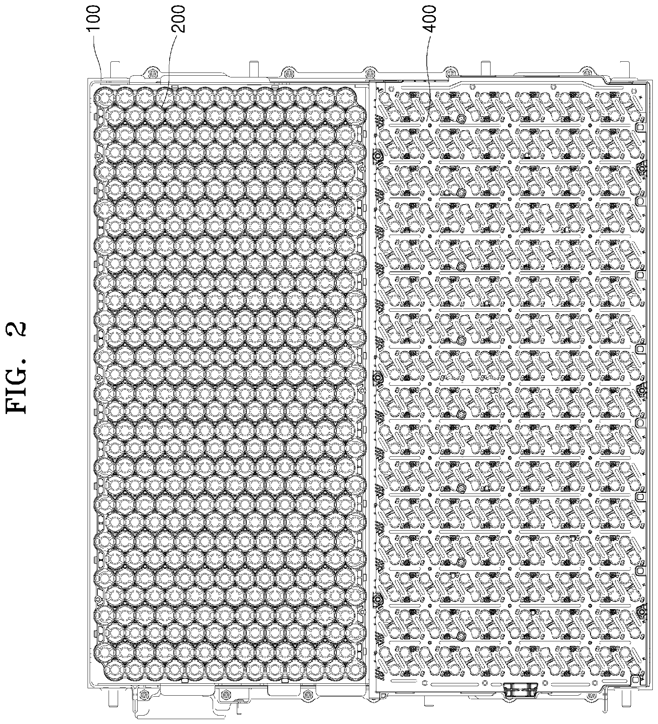

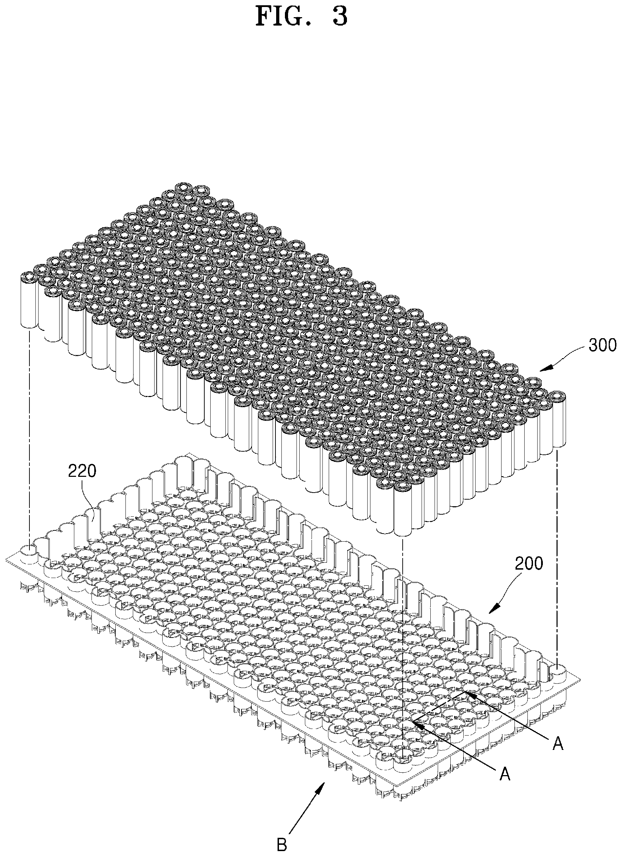

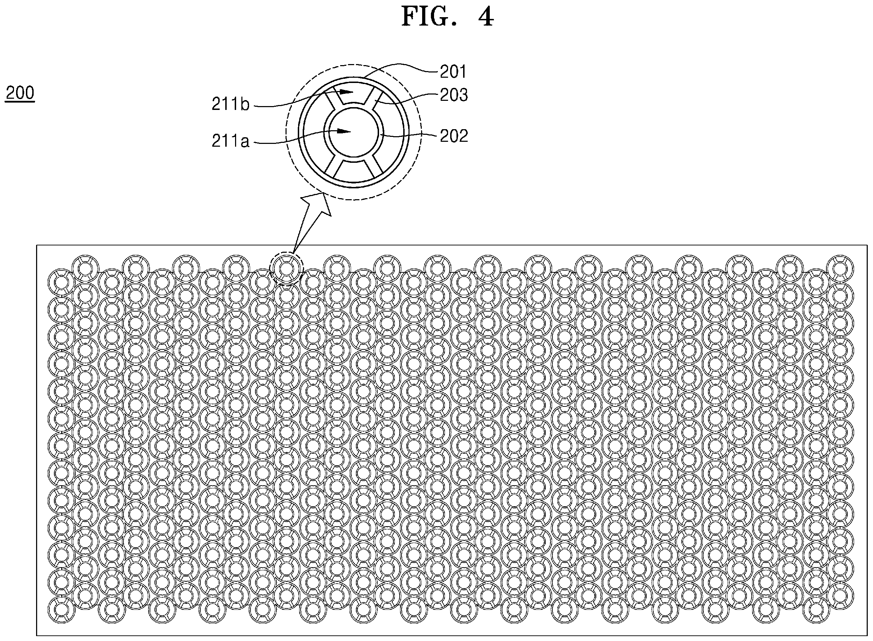

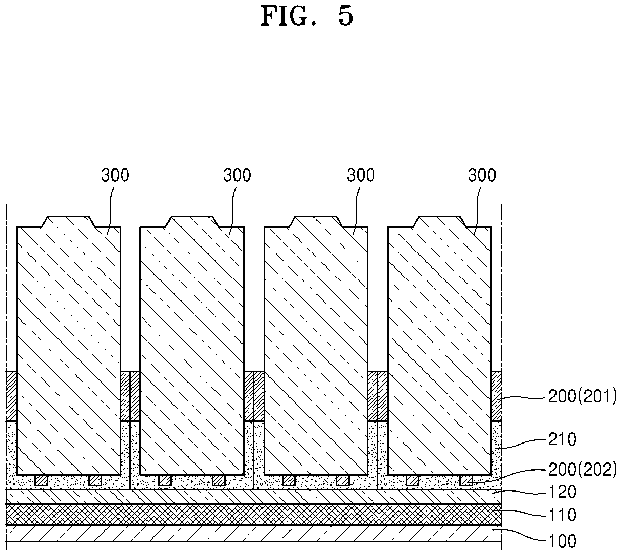

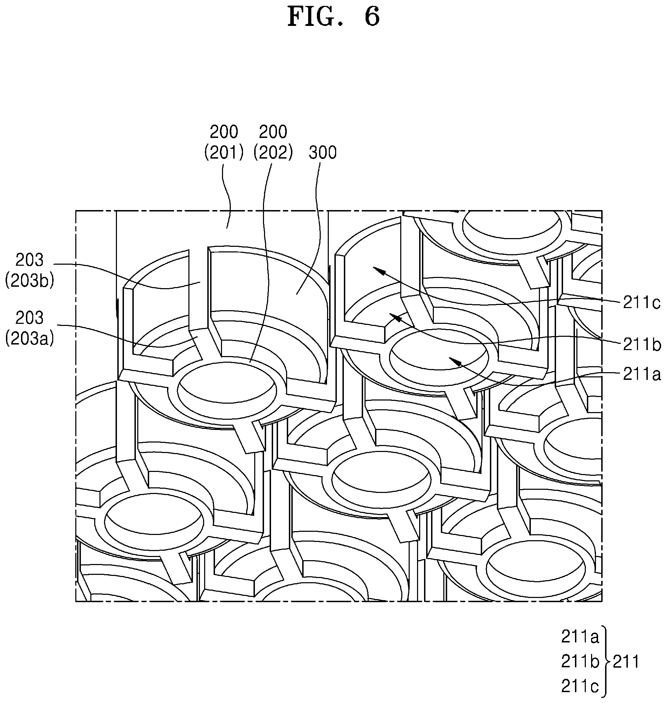

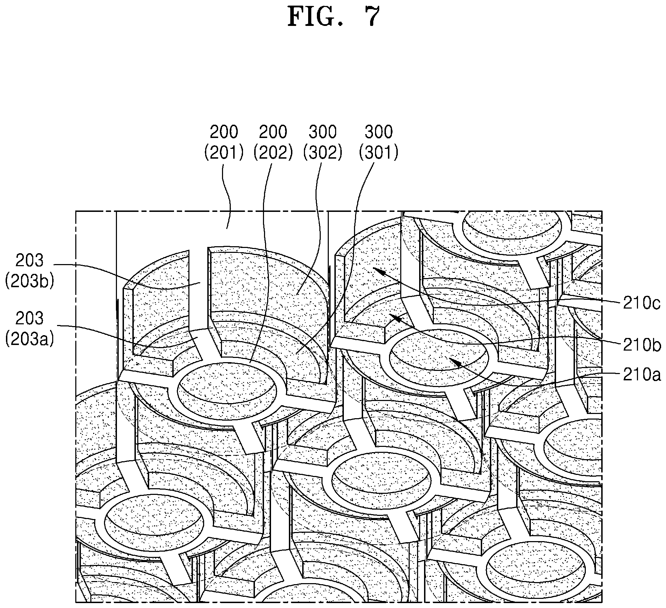

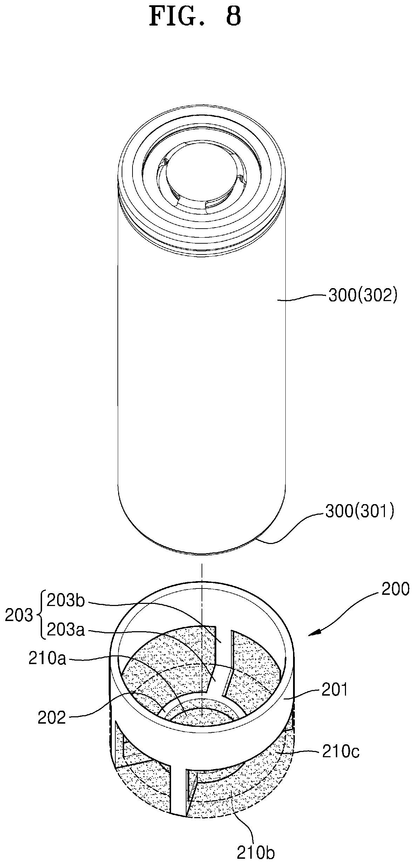

FIG. 1 is a partial exploded perspective view of a battery pack according to embodiments of the present disclosure. FIG. 2 is a partial plan view of a battery pack according to embodiments of the present disclosure. FIG. 3 is an exploded perspective view of a plurality of battery cells and a holder portion, according to embodiments of the present disclosure. FIG. 4 is a plan view of a holder portion according to embodiments of the present disclosure. FIG. 5 is a cross-sectional view taken along A-A of FIG. 3. FIG. 6 is a view of a battery pack viewed in a direction B of FIG. 3. FIG. 7 is view of a battery pack viewed in a direction of FIG. 3, including a filling portion. FIG. 8 is an exploded perspective view of a part of a holder portion into which a battery cell is inserted, together with a filling portion.

Referring to FIGS. 1 to 8, a battery pack includes a plurality of battery cells 300, a housing 100 accommodating the plurality of battery cells 300, a bus bar 400 electrically connecting the plurality of battery cells 300, a holder portion 200 fixing a bottom portion and a side portion of the plurality of battery cells 300, a cooling unit 110 under the holder portion 200 and configured to cool the plurality of battery cells 300, and a filling portion 210 configured to contact a surface portion of the plurality of battery cells 300 between the plurality of battery cells 300 and the cooling unit 110. The filling portion 210 covers at least a part of the bottom portion of the plurality of battery cells 300 and at least a part of the side portion of the plurality of battery cells 300.

The housing 100 may have a rectangular parallelepiped shape as shown in FIG. 1. Although the housing 100 is depicted and described as having the rectangular parallelepiped shape, in one or more embodiments the housing 100 may have any other suitable shape. An array of the plurality of battery cells 300 may be accommodated in an inner space of the housing 100. The plurality of battery cells 300 may be cylindrical secondary batteries. The plurality of battery cells 300 may be configured to be repeatedly charged and discharged.

The plurality of battery cells 300 may be arranged in a plurality of columns and a plurality of rows inside the housing 100, and the plurality of battery cells 300 arranged in the plurality of columns and the plurality of rows may be alternately arranged (e.g., staggered).

The plurality of battery cells 300 arranged in the plurality of columns and the plurality of rows may be fixed by the holder portion 200 inside the housing 100. The holder portion 200 may be on a lower portion of the plurality of battery cells 300 to fix the plurality of battery cells 300.

The bus bar 400 may be on an upper portion of the plurality of battery cells 300. The bus bar 400 may be on the upper portion of the plurality of battery cells 300 and connected to all of the plurality of battery cells 300 to electrically connect the plurality of battery cells 300 to each other.

According to one or more embodiments, the cooling unit 110, which is configured to cool the plurality of battery cells 300, may be under the holder portion 200. The cooling unit 110 may be arranged inside a bottom portion of the housing 100 under the holder portion 200. A coolant may flow on and/or in the cooling unit 110. By appropriately discharging or reducing heat generated during an operation of the plurality of battery cells 300 through the cooling unit 110, a temperature of the battery pack 10 may be controlled.

A sheet portion 120 may be arranged between the cooling unit 110 and the holder portion 200. The sheet portion 120 may have insulation. For example, the sheet portion 120 may be a polyethylene terephthalate (PET) sheet having insulation. Electrical insulation between the plurality of battery cells 300 and the housing 100 may be achieved through the sheet portion 120.

The filling portion 210 may be between the plurality of battery cells 300 mounted on the holder portion 200 and the sheet portion 120. In one or more embodiments, the filling portion 210 may have electrical insulation. For example, the filling portion 210 may be a thermal glue having electrical insulation. The filling portion 210 may be an adhesive material that facilitates heat transfer and is cured by heat. Thus, heat-dissipating performances can be increased through above materials. Although in one or more embodiments the filling portion 210 is described as a thermal glue, in one or more embodiments the filling portion 210 may be an adhesive material such as a silicon adhesive, etc., having thermal conductivity, although the present disclosure is not limited thereto.

The filling portion 210 (e.g., the thermal glue or the adhesive material) may be on a top surface of the sheet portion 120 and thus may be accommodated in an opening portion 211 in the holder portion 200 as will be described below. Through filling portion 210 (e.g., the thermal glue having thermal conductivity), heat generated in the plurality of battery cells 300 may be transferred to the cooling unit 110. Through filling portion 210 (e.g., the thermal glue having thermal conductivity and electrical insulation), electrical insulation may be achieved between the plurality of battery cells 300 and the housing 100 including the cooling unit 110.

The holder portion 200 may be on a lower portion of the plurality of battery cells 300 to fix the plurality of battery cells 300. The holder portion 200 may be configured to accommodate the plurality of battery cells 300 at the same intervals (or substantially the same intervals) such that each of the plurality of battery cells 300 may be fixed on the holder portion 200 with a constant interval (or substantially a constant interval) with adjacent battery cells 300.

According to one or more embodiments, the holder portion 200 may include the opening portion 211 through which a part of the bottom portion and a part of the side portion of the plurality of battery cells 300 are exposed, and the filling portion 210 may cover the part of the bottom portion and the part of the side portion of the plurality of battery cells 300 that are exposed by the opening portion 211.

The holder portion 200 may be configured to fix not only the bottom portion of the plurality of battery cells 300 but also the side portion of the plurality of battery cells 300 to prevent (or at least mitigate) the plurality of battery cells 300 from inadvertently dislodging from the holder portion 200 by fixing the plurality of battery cells 300. In this way, it is possible to prevent the plurality of battery cells 300 mounted on the holder portion 200 from tilting, thereby maintaining a constant or substantially constant interval between the plurality of battery cells 300 and thus achieving mechanical stability of the plurality of battery cells 300.

The opening portion 211 in the holder portion 200 may be on the side portion of the plurality of battery cells 300 as well as the bottom portion thereof, and the filling portion 210 may cover both the bottom portion and the side portion of the plurality of battery cells 300, thereby achieving a heat-dissipating function through the side portion of the plurality of battery cells 300 and thus further improving heat-dissipating performance for the plurality of battery cells 300.

The filling portion 210 (e.g., the thermal glue of the adhesive material) may be or include a material having electrical insulation, and the holder portion 200 and the sheet portion 120 may also be or include a material having electrical insulation, such that electrical insulation between the plurality of battery cells 300 and the housing 100 including the cooling unit 110 may be triple-protected.

Hereinbelow, a detailed structure of the holder portion 200 and the filling portion 210 according to one or more embodiments will be described in more detail.

According to one or more embodiments, the holder portion 200 may include a first holder portion 201 extending along a circumferential direction of a side portion of a battery cell among the plurality of battery cells 300 to fix the side portion of the battery cell, a second holder portion 202 in a center of a bottom portion of the battery cell, and a third holder portion 203 bent along the bottom portion and the side portion and connecting the first holder portion 201 to the second holder portion 202.

The first holder portion 201 may be formed in a circumferential direction of a side portion of a cylindrical battery cell to fix the side portion of the battery cell. Thus, a battery cell inserted into the first holder portion 201 may not be able to move in a side (lateral) direction due to the first holder portion 201.

The second holder portion 202 may have a ring shape (i.e., an annular shape) in the center of the bottom portion of the cylindrical battery cell to fix the bottom portion of the battery cell. Thus, a battery cell mounted on the second holder portion 202 may not be able to move in a downward direction due to the second holder portion 202.

The third holder portion 203 may connect the first holder portion 201 to the second holder portion 202 and may be bent along a corner portion of a battery cell mounted on the first holder portion 201 and the second holder portion 202. The third holder portion 203 may extend radially outward from the second holder portion 202. In one or more embodiments, the third holder portion 203 may include four third holder portions 203 arranged circumferentially around the second holder portion 202 and extending radially outward from the second holder portion 202, but the number of third holder portions 203 is not limited thereto. The third holder portions 203 may be arranged at regular intervals (or substantially regular intervals) in a circumferential direction around the second holder portion 202.

The first holder portion 201, the second holder portion 202, and the third holder portion 203 may be integral. In this way, the rigidity of the holder portion 200 may be achieved, thereby securing a fixing force with respect to the plurality of battery cells 300.

On a bottom portion 301 of a battery cell, a first opening portion 211a may be included in the second holder portion 202 (e.g., the first opening portion 211a may be formed by the ringshaped second holder portion 202), and the battery cell may be exposed to outside of the holder portion 200 through the first opening portion 211a. A first filling portion 210a covering a part of the bottom portion 301 of the battery cell may be accommodated in the first opening portion 211a.

In this way, heat generated on the bottom portion 301 of the plurality of battery cells 300 may be dissipated to outside of the plurality of battery cells 300 through the first filling portion 210a on the bottom portion of the plurality of battery cells 300.

The third holder portion 203 may also include a plurality of 3rd-1 holder portions 203a arranged circumferentially around and extending radially outward from the second holder portion 202 on the bottom portion 301 of the battery cell.

On the bottom portion 301 of the battery cell, a second opening portion 211b may be formed between an outer portion of the second holder portion 202 and two adjacent 3rd-1 holder portions 203a among the plurality of 3rd-1 holder portions 203a, and the battery cell may be exposed to outside of the holder portion 203a through the second opening portion 211b. A second filling portion 210b covering a part of the bottom portion 301 of the battery cell may be accommodated in the second opening portion 211b.

In this way, heat generated on the bottom portion and lower corner portion of the plurality of battery cells 300 may be dissipated to outside of the plurality of battery cells 300 through the second filling portion 210b arranged on the bottom portion and the corner portion of the plurality of battery cells 300.

The first holder portion 201 may be at a position spaced apart from the bottom portion 301 of the battery cell, and the third holder portion 203 may include a plurality of 3rd-2 holder portions 203b arranged spaced apart from each other in a circumferential direction of the side portion 302 of the battery cell.

On the side portion 302 of the battery cell, three opening portions 211c may be formed between the first holder portion 201 and the bottom portion 301 of the battery cell and between two adjacent 3rd-2 holder portions 203b among the plurality of 3rd-2 holder portions 203b, and the battery cell may be exposed to outside of the holder portion 200 through the third opening portion 211c. A third filling portion 210c covering a part of the side portion 302 of the battery cell may be accommodated in the third opening portion 211c.

In this way, heat generated on the side portion 302 of the plurality of battery cells 300 may be dissipated to outside of the plurality of battery cells 300 through the third filling portion 210c on the side portion 302 of the plurality of battery cells 300.

In one or more embodiments, the 3rd-1 holder portions 203a and the 3rd-2 holder portions 203b forming the third holder portion 203 may be integral to protect the corner portion of the plurality of battery cells 300, and the filling portion 210 may be accommodated in the opening portion formed by the 3rd-1 holder portion 203a and the 3rd-2 holder portion 203b, thereby achieving heat-dissipating performance for heat generated on the corner portion of the plurality of battery cells 300 and achieving insulation for the corner portion of the plurality of battery cells 300.

As such, the present disclosure has been described with reference to the embodiments shown in the drawings, but this is merely an example. It would be fully understood by those of ordinary skill in the art that various modifications and other equivalent embodiments are possible from the embodiments. Therefore, the true technical scope of the present disclosure should be defined by the appended claims.

Specific technical details described in the embodiments are examples, and do not limit the technical scope of the embodiments. In order to briefly and clearly describe the description of the present disclosure, the description of conventional general techniques and configurations may be omitted.

Connections of lines or connection members between components shown in the drawings are illustrative of functional connections and/or physical or circuit connections, and in practice, may be expressed as alternative or additional various functional connections, physical connections, or circuit connections. In addition, when there is no specific mentioning, such as "essential" or "important", it may not be a necessary component for the application of the present disclosure.

A designator "the" or similar designators described in the description and the claims may refer to both singular and plural, unless otherwise specifically limited. In addition, when the range is described in the embodiments, the range includes the present disclosure to which an individual value falling within the range is applied (unless stated otherwise), and is the same as the description of an individual value constituting the range in the description of the present disclosure.

When there is no apparent description of the order of operations constituting the method according to the embodiments or a contrary description thereof, the operations may be performed in an appropriate order.

However, the present disclosure is not necessarily limited according to the describing order of the operations. The use of all examples or exemplary terms (for example, etc.) in the present disclosure are to simply describe the present disclosure in detail, and unless the range of the present disclosure is not limited by the examples or the exemplary terms unless limited by the claims.

In addition, it may be understood by those of ordinary skill in the art that various modifications, combinations, and changes may be made according to design conditions and factors within the scope of the appended claims or equivalents thereof.

The battery pack according to embodiments of the present disclosure may achieve heat-dissipating performance through a structure in which an opening portion is formed on a holder portion fixing a battery cell.

The battery pack according to embodiments of the present disclosure may achieve a fixing force of a battery cell through a structure for fixing a bottom portion and a side portion of the battery cell together.

Effects of the present disclosure are not limited to the effects mentioned above, and other effects not mentioned will be clearly understood by those of ordinary skill in the art from the detailed description and description of the claims.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims.

## Claims

1. A battery pack (10) comprising:
a plurality of battery cells (300);
a housing (100) accommodating the plurality of battery cells (300);
a bus bar (400) electrically connecting the plurality of battery cells (300);
a holder portion (200) fixing a bottom portion (301) and a side portion (302) of the plurality of battery cells (300);
a cooling unit (110) under the holder portion (200) and configured to cool the plurality of battery cells (300); and
a filling portion (210) contacting a surface portion of the plurality of battery cells (300) between the plurality of battery cells (300) and the cooling unit (110),
wherein the filling portion (210) covers at least part of the bottom portion (301) of the plurality of battery cells (300) and at least part of the side portion (302) of the plurality of battery cells (300).

2. The battery pack (10) as claimed in claim 1, wherein the holder portion (200) comprises an opening portion (211) through which a part of the bottom portion (301) and a part of the side portion (302) of the plurality of battery cells (300) are exposed, and wherein the filling portion (210) covers the part of the bottom portion (301) and the part of the side portion (302) of the plurality of battery cells (300) exposed by the opening portion (211).

3. The battery pack (10) as claimed in one of the claims 1 to 2, further comprising a sheet portion (120) between the filling portion (210) and the cooling unit (110).

4. The battery pack (10) as claimed in claim 3, wherein the filling portion (210) is disposed between the plurality of battery cells (300) fixed on the holder portion (200) and the sheet portion (120).

5. The battery pack (10) as claimed in one of the claims 1 to 4, wherein the filling portion (210) is a thermal glue.

6. The battery pack (10) as claimed in one of the claims 1 to 4, wherein the filling portion (210) is a cured adhesive for facilitating heat transfer.

7. The battery pack (10) as claimed in one of the claims 1 to 6, wherein the holder portion (200) comprises:
a first holder portion (201) extending in a circumferential direction of a side portion (302) of a battery cell (300) among the plurality of battery cells (300), the first holder portion (201) fixing the side portion (302) of the battery cell (300);
a second holder portion (202) in a center of a bottom portion (301) of the battery cell (300) among the plurality of battery cells (300), the second holder portion (202) fixing the bottom portion (301) of the battery cell (300); and
a third holder portion (203) bent along the bottom portion (301) and the side portion (302) of the battery cell (300) among the plurality of battery cells (300), the third holder portion (203) connecting the first holder portion (201) to the second holder portion (202).

8. The battery pack (10) as claimed in claim 7, wherein the second holder portion (202) has a ring shape forming a first opening portion (211a) on the bottom portion (301) of the battery cell (300), and wherein the battery cell (300) is exposed to an outside of the holder portion (200) through the first opening portion (211a).

9. The battery pack (10) as claimed in claim 8, further comprising a first filling portion (210a) covering at least a part of the bottom portion (301) of the battery cell (300) and being accommodated in the first opening portion (211a).

10. The battery pack (10) as claimed in one of the claims 7 to 9, wherein the third holder portion (203) comprises:
a plurality of 3rd-1 holder portions (203a) arranged circumferentially around the second holder portion (202) and extending radially outward from the second holder portion (202) on the bottom portion (301) of the battery cell (300); and
a second opening portion (211b) between an outer side of the second holder portion (202) and two adjacent 3rd-1 holder portions (203a) among the plurality of 3rd-1 holder portions (203a) on the bottom portion (301) of the battery cell (300),
wherein the battery cell (300) is exposed to an outside of the holder portion (200) through the second opening portion (211b).

11. The battery pack (10) as claimed in claim 10, further comprising a second filling portion (210b) covering part of the bottom portion (301) of the battery cell (300) accommodated in the second opening portion (211b).

12. The battery pack (10) as claimed in one of the claims 7 to 11, wherein the first holder portion (201) is spaced apart from the bottom portion (301) of the battery cell (300), and wherein the third holder portion (203) comprises:
a plurality of 3rd-2 holder portions (203b) spaced apart from each other in a circumferential direction of the side portion (302) of the battery cell (300); and
a third opening portion (211c) between the first holder portion (201) and the bottom portion (301) of the battery cell and between two adjacent 3rd-2 holder portions (203b) among the plurality of 3rd-2 holder portions (203b) on the side portion (302) of the battery cell (300),
wherein the battery cell (300) is exposed to an outside of the holder portion (200) through the third opening portion (211c).

13. The battery pack (10) as claimed in claim 12, further comprising a third filling portion (210c) covering at least a part of the side portion (302) of the battery cell (300) accommodated in the third opening portion (211c).

14. The battery pack (10) as claimed in one of the claims 4 to 13, wherein the first holder portion (201), the second holder portion (202), and the third holder portion (203) are integrally formed.

15. The battery pack (10) as claimed in claim 14, wherein the third holder portion (203) comprises:
a plurality of 3rd-1 holder portions (203a) arranged circumferentially around the second holder portion (202) and extending radially outward from the second holder portion (202) on the bottom portion (301) of the battery cell (300); and
a plurality of 3rd-2 holder portions (203b) spaced apart from each other in a circumferential direction of the side portion (302) of the battery cell (300), and wherein the 3rd-1 holder portions (203a) and the 3rd-2 holder portions (203b) are integrally formed.
